(19) Europäisches Patentamt

European Patent Office

Office européen des brevets

(11) **EP 2 415 517 A1**

(12) **EUROPEAN PATENT APPLICATION**

(43) Date of publication:
08.02.2012 Bulletin 2012/06

(21) Application number: 10007728.8

(22) Date of filing: 26.07.2010

(51) Int Cl.:
*B01J 19/00* (2006.01)     *C12M 3/00* (2006.01)
*G01N 33/50* (2006.01)     *B01L 3/02* (2006.01)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: **Stichting Dutch Polymer Institute**
**5612 AB  Eindhoven (NL)**

(72) Inventor: **The designation of the inventor has not yet been filed**

(74) Representative: **Renkema, Jaap**
**IPecunia Patents B.V.**
**P.O. Box 593**
**6160 AN Geleen (NL)**

(54) **Process for making array**

(57) The present invention relates to a process for making an array comprising array points In a predetermined pattern on a substrate, each of the array points comprising a predetermined number of a particulate object capable of functioning in an aqueous condition. The process comprises the steps of: (A) providing a hydrophobic liquid onto the substrate, (B) depositing a number of microdroplets of an aqueous suspension containing the particulate object in each of the array points by inkjet technology. The predetermined number of the microdroplets of the suspension is determined as a function of the concentration of the suspension and the average volume of the microdroplets of the suspension.

EP 2 415 517 A1

**Description**

The present invention relates to a process for making an array of spots each containing particulate object(s) capable of functioning in an aqueous condition, such as a microarray for assaying biological material. A mlcroarray is a multiplex lab-on-a-chip, which consists of an array on a solid substrate that assays a plurality of materials using high-throughput screening methods.

Several types of technologies are known for the process for making a microarray. One type is photolithography, In which a glass wafer, modified with photolabile protecting groups is selectively activated for DNA synthesis by shining light through a photomask. Repeated deprotection and coupling cycles enable the preparation of high-density oligonucleotide microarrays (see for example, U.35,744,305).

Another type is microspotting, in which deposition technologies are employed that enable automated microarray production by printing small quantities of pre-made biochemical substances onto solid surfaces. Printing is accomplished by direct surface contact between the printing substrate and a delivery mechanism, such as a pin or a capillary. Robotic control systems and multiplexed printheads allow automated microarray fabrication.

Yet another type is ink jet technology. It utilizes a controlled impulse to transfer fluid substances from miniature nozzles to solid surfaces. Using a piezoactuator, for example, an electric current through a piezoelectric crystal which expands to create an acoustic wave, which expels a droplet out of the nozzle. Inkjet technologies include continuous and drop-on-demand devices. In addition to piezoelectric ink jets, heat may be used to form and propel drops of fluid using bubble-jet or thermal ink jet heads; however, such thermal ink jets are not always suitable for the transfer of biological materials. Examples of the use of ink jet technology Include U.S. 5,658,802.

E. Luong-Van et al., Biointerphases, Vol. 4, No. 2, pp. 13-18, June 2009 describes a seeding of multiple cell types at specific locations on a substrate surface. Quasi-hemispherical drops of cell solution are deposited onto a cell culture surface Immersed under barrier oil without the use of Inkjet technology. Subsequent flooding with an aqueous cell-compatible buffer displaces the barrier oil, allowing the cells to grow freely across the surface.

Drawbacks of the conventional processes include the fact that they require cumbersome steps to obtain mlcroarrays or that the array density (*i.e.* the number of distinct array points per unit of area) is low. Moreover, no easy way has been provided to obtain microarrays with a controlled, discrete number of particulates in each array point.

An objective of the present invention is therefore to provide an improved process for making an array for assaying particulate objects where the above-mentioned and/or other needs in the art are met.

Accordingly, the present invention provides a process for making a microarray comprising array points in a predetermined pattern on a substrate, each of the array points comprising a predetermined number of a functional particulate object capable of functioning in an aqueous condition, comprising the steps of: (A) providing a hydrophobic liquid onto the substrate, (B) depositing a predetermined number of microdroplets of an aqueous suspension containing the particulate object in each of the array points by inkjet technology, wherein the predetermined number of the microdroplets of the suspension is determined as a function of the concentration of the suspension and the average volume of the microdroplets of the suspension.

One of the realizations forming the basis of the invention is the realization of the difficulty of depositing a desired number of discrete particulate objects in a certain location from a dilute solution. The success of depositing a desired number of discrete particulate objects in a certain location is a probability function. Taking the desired number in a location to be one as an example, this is hereinafter described.

From a theoretical standpoint, if one assumes a random distribution of cells in the suspension, their abundance in a given aliquot can be treated as a Poisson distribution probability function. More specifically, the probability $P$ of finding a given number of particulate objects $n$ in a given droplet can be expressed as a function of the average particulate object occupancy in aliquot volume, $\lambda$.

$$P(n) = \frac{\lambda^n}{n!} e^{-\lambda}$$

In this case, one can calculate the ideal particulate object number per dispensed aliquot for dispensing a single particulate object (*i.e. n* = 1) by taking the first derivative.

$$P(\lambda)_{n=1} = \lambda e^{-\lambda}$$

Where $\lambda$ is the average number of particulate objects in the aliquot volume. Provided that the particulate objects neither attract nor repell one another (*i.e.* that the distribution is truly random), this model should also be useful for predicting the optimal value for λ to produce the maximum fraction of points containing single particulate object can be obtained; where the probability has been maximized, the slope of the curve will equal zero; thus, solving for the derivative:

$$P'(\lambda)_{n=1} = \lambda^0 \cdot e^{-\lambda} + \lambda \cdot (-\lambda)e^{-\lambda}$$

$$P'(\lambda)_{n=1} = e^{-\lambda} - \lambda^2 e^{-\lambda}$$

Since the derivative will equal zero at the local maximum, the equation simplifies. Solving for λ:

$$0 = e^{-\lambda} - \lambda^2 e^{-\lambda}$$

$$0 = 1 - \lambda^2$$

$$\lambda^2 = 1$$

$$\lambda = 1$$

Plugging this value for λ back into the original equation, the probability of a single particulate object in a given optimized aliquot is then equal to roughly 0.37. Thus, it can now be understood from the above calculation that depositing a desired number of discrete particulates in array points from a dilute solution is not trivial and many array points may actually end up having an undesired number of particulates.

The process according to the invention allows making of high-density arrays with a controlled number of discrete particulate objects In each array point in a simple and easy manner, by choosing the appropriate number of microdroplets to result In the desired number of the particulate object.

According to the process of the present invention, the number of the microdroplets of the suspension to be deposited per array point is determined as a function of the concentration of the suspension and the average volume of the microdroplets of the suspension. Methods for determining the volume of microdroplets are well known in the art. The volume of the microdroplets may be determined as the volume calculated from the optically measured (e.g. by stroboscopic camera) diameter of the microdroplet, approximating the microdroplet as a sphere. Said number of the microdroplets should be determined so that the highest proportion of the array points contains the predetermined number of the particulate object, In some preferred embodiments of the present invention, the predetermined number of the microdroplets deposited in each of the array points is an integer closest to the product of the desired number of the particulate object in the array point and the inverse of the product of the concentration of the suspension and the average volume of the microdroplets. In some preferred embodiments of the present invention, said predetermined number of the microdroplets determined by the above calculation is further optimized experimentally. This can be performed by, e.g., changing the concentration and/or the volume of the microdroplets and recalculating the number of the microdroplets which should be deposited, and comparing their results. By repeating this, a statistical result can be obtained to determine the number of microdroplets that should be deposited for providing a desired number of functional substance.

The number of the microdroplets of the suspension to be deposited per array point is preferably more than one. It was found that, rather than dispensing one large microdroplet having a certain volume, dispensing microdroplets having a smaller volume multiple times which sums up to said certain volume is advantageous for the desired results.

In case of an array where a single particulate object is desired per array point, the concentration of the suspension and/or the volume of the microdroplet should be adjusted if the proportion of the array points containing one particulate object is lower than 0.37, which is the theoretical probability of finding one particulate object in an array point.

The inventors have further realized that the combination of inkjet technology and a hydrophobic liquid allows the provision of a high-density array in an simple and easy manner.

Use of the Inkjet technology allows a precise control of the positioning and a small volume of the array points allowing manufacturing of an array with a high density array points. In terms of precision, the use of Inkjet technology allows positioning of droplets in an organized pattern with micron resolution. Use of e.g. a micropipette to dispense liquid onto a surface tends to have the result that the final position of the liquid is not precisely controlled. This makes arrays made using such a technology much less amenable to automatic analysis of the array points. As for the density, the inventors have realized that the size of the array points is critical in obtaining a high density array, When the volume of a droplet having a low contact angle with a substrate is changed from $V_1$ to $V_2$, change in the minimum area from $A_1$ to $A_2$ occupied by the droplet is calculated to have the following relationship:

$$(A_1 - A_2) = (V_1/V_2)^{2/3}$$

This means that switching from a nanoliter droplet to a microliter droplet Increases the area per spot by a factor of 100, and the number of array points in a single array of the same size is consequently decreased by a factor of 100. Thus, the use of the inkjet technology which allows depositing of small volume droplets is critically advantageous for obtaining a high density array.

However, the Inventors have also realized that in case of small volume droplets, a problem arises that the droplets dehydrate quickly; this is less of an issue in case of larger volume droplets, due to the inherent difference in surface area to volume ratios. This can cause particulate objects to lose functionallty, *i.e.* in case of healthy living cells, many cells will die upon drying. The inventors have found out that providing a hydrophobic liquid onto the surface of the substrate prior to, or immediately after, depositing the small volume droplets prevents the droplets from drying out. This measure gives time to provide many array points in an array without running the risk of the earlier deposited microdroplets drying out and the particulate object ceasing to function. Furthermore, this allows performing actions to the array points after the array Is completed if desired, such as checking the number of the particulate object in each of the array points.

Summarizing, the present invention relates to a combination of the use of a hydrophobic liquid and the use of Inkjet technology to deposit a predetermined number of microdroplets to make an array, which is based on a series of realizations by the inventors as described above.

The concentration of the suspension can be decided according to specific needs, as long as the suspension can be deposited in microdroplets by inkjet technology. For example, in case the particulate object is a cell, a concentration of $10^6$ to $10^8$ cells/mL is preferable for inkjet printing. In this case, the concentration is determined by putting volumes of the suspension in sectors of a hemocytomer and counting the number of cells in each sector. A flow cytometer or particulate analyzer may also be used.

In some embodiments of the present invention, the average volume of the microdroplets of the suspension to be deposited is between 10 to 200 pL, preferably 24 to 84 pL, more preferably 40 to 50 pL.

The hydrophobic liquid may either be removed before assay or remain on the substrate, depending on the specific needs. The hydrophobic liquid can protect the particulate object as long as necessary. If the hydrophobic liquid interferes with the assay, it can be removed later on.

In the present invention, a particulate object capable of functioning in an aqueous condition is herein understood to mean a substance that stops exhibiting its functions when it is in a dried state and only exhibits its function in an aqueous medium. Preferably, the particulate object is a biological material. In the case of healthy living cells, the cells die when they become dehydrated, and lose their function of vitality. In the case of many enzymes, dehydration can result in structural misfolding, resulting in denaturation. Another example of the particulate object is a microcrystal. Such a microcrystal may be used for polymorphism screening where co-crystals are formed. Preferably, the particulate object is chosen from the group consisting of a cell, a cell fraction, tissue, antibody, microorganism.

In some embodiments of the present invention, the hydrophobic liquid is permeable to oxygen. This is a necessary feature when the particulate object is a biological material requiring aerobic respiration to maintain vitality. The hydrophobic liquid is also useful for allowing biological material to be cultured in isolation, with each of the mlcrodroplets acting as independent micro-culture flasks. Examples of suitable hydrophobic liquids include aliphatic alkanes of C8-C20 (alkanes having a chain of 8 to 20 carbons), such as octane, nonane, decane, undecane, dodecane, tridecane, tetradecane, pentadecane, hexadecane, heptadecane, octadecane, nonadecane, or icosane and a mixture thereof. The range of C8-C20 are suitable from the point of their boiling point and melting point. Aliphatic alkanes having a melting point of above 37 °C is unsuitable since they cease to be liquid barriers under typical processing conditions. Other suitable hydrophobic liquids include mineral oil and silicone oil.

The predetermined number of the particulate objects in each array point is preferably 1-100, more preferably 1-30. Particularly useful arrays are the ones comprising smaller number of particulate object in each array point, such as 1-10 or more preferably 1-5. A special array comprises one particulate object in each array point. Such an array may be utilized for making a statistical analysis on the property or the function of the particulate object by analyzing single particulate object at a time without interference from other particulate objects. In the case that the particulate object is a cell, such an array is also referred as a single-cell microarray.

The number of the array points in the array according to the present invention is in principle not limited, but preferably from 24 to 800,000, more preferably 100 to 600,000.

In some embodiments of the present invention, the average center-to-center distance between the array points is between 40 and 2,000 $\mu$m. Herein, the average distance Is meant the average of the distances between the geometric centers of closest array points. The distances may be determined by the setting of the inkjet printer.

The inventors have further realized that it is advantageous to define the positions of the array points with a water miscible liquid with a good affinity for the substrate prior to depositing the suspension of the particulate object. The liquid adheres to the substrate, so that the positions of the array points are precisely controlled, and cannot easily move. Accordingly, in some embodiments of the present invention, the process further comprises the step of: (A0) depositing microdroplets of a water miscible anchoring liquid having an equilibrated contact angle with the substrate of between 5 and 90° onto the substrate to form the array points in the predetermined pattern by inkjet technology before and/or during step (A), and the hydrophobic liquid covers the array points in step (A). The contact angle may be determined by static sessile drop. In these embodiments, the array points are first defined by the microdroplets of the anchoring liquid deposited on the substrate by inkjet printing. Subsequently, these array points are covered by the hydrophobic liquid. Then, the microdroplets of the aqueous suspension are deposited onto the array points defined by the anchoring liquid. These embodiments have a further important advantage that the process can be applied to a wide range of substrates. Substrates commonly used for making a microarray are made of glass, which may be hydrophobic or hydrophilic. Other examples of materials for the substrates are polypropylene, polyethylene, polystyrene, silicon wafer, polyurethane, aluminum. Their surface may also be sputtered e.g. with silver, gold and carbon. If the substrate surface is extremely hydrophilic, then the mlcrodroplets of the aqueous suspension may have the problems with complete wetting, and consequently printing may result in a low resolution of the array points. If the substrate surface is extremely hydrophobic, then the microdroplets will roll on the surface. These embodiments comprising step (A0) allow the use of substrates which could have the above-mentioned problems with the aqueous suspension relating to hydrophilicity/hydrophobicity. According to the embodiments of the present invention currently described, the array points are defined by the microdroplets of the anchoring liquid. Since the aqueous suspension is deposited into and comes into contact with the anchoring liquid, the affinity between the aqueous suspension and the substrate does not need to be considered. Thus, these embodiments allow the important advantage that a wide range of substrates may be used.

In some embodiments of the present invention, step (A0) is performed before step (A). More preferably, step (A) and step (A0) are performed in multiple steps in an alternating order. In these more preferred embodiments, steps (A) and (A0) involve dispensing an amount of the hydrophobic liquid after each of the array points is formed by the anchoring liquid, the amount being chosen to advance the contact line between the hydrophobic liquid and the substrate to cover the newly formed array point. This has an important advantage that the array points formed from the anchoring liquid are immediately covered by the hydrophobic liquid after their formation so that they would have no time to evaporate.

In some embodiments of the present invention, the anchoring liquid is a culture medium. The culture medium may be of any known type, but examples for microorganisms include nutrient broths and Luria Bertani medium. In cases of cells, the culture medium may contain hormones or growth factors. Use of culture medium for biological materials is advantageous in that It provides an immobilized array point which is also used for growing the biological material. It will be appreciated that the specific combinations of the growth media and the biological material are well-known to the skilled person, and thus are not repeated herein.

The average volume of the microdroplets of the anchoring liquid is preferably 10 pL -100 nL, more preferably 100 pL-1 nL.

In some embodiments of the present invention, the process further comprises the step of: (C) inspecting the array points. By the inspection, it may be determined, e.g. how many particulate object each of the array points contain after step (B). This step allows to determine which of the array points actually contain the desired number of particulate object. Array points containing desired number of particulate object can be marked, ready to be further used for subsequent assay. In the case that the particulate objects are cells, further advantageous information to be determined by the inspection include their morphology after step (B) and their viability.

For example, if one particulate object is desired in each of the array point, array points comprising one particulate object can be marked as ready for assay. Array points comprising two or more particulate objects may be marked as unsuitable for use. Array points comprising no particulate object may be marked, and subsequently deposition of the microdroplets of aqueous suspension may be performed again only for these array points containing no particulate object. Accordingly, in a particularly advantageous embodiment of the present invention, the predetermined number of the particulate object is one and the process further comprises the step of: (D) depositing said predetermined number of microdroplets in the array points that contain no cell as determined in step (C).

In a particularly preferred embodiment, a process for making a single-cell microarray comprising array points each comprising one cell, comprising the steps of: - depositing microdroplets of a culture medium onto a substrate to form the array points in the predetermined pattern by inkjet technology while providing a mineral oil onto the substrate to cover the assay points, such that an amount of the hydrophobic liquid is deposited after each of the array points is formed by the anchoring liquid, the amount being chosen to advance the contact line between the hydrophobic liquid and the substrate to cover the newly formed array point, - depositing a predetermined number of microdroplets of an aqueous suspension containing the cell in each of the array points by inkjet technology and - inspecting the array points to determine which of the array points contain single cell, wherein the predetermined number of the microdroplets of the suspension is determined as a function of the concentration of the suspension and the average volume of the microdroplets of the suspension.

Hereinafter, the present invention is further illustrated referring to the following non-limiting examples.

## Chemicals & materials.

Trypan blue (Cat. No. 15250-061) was purchased from invitrogen (Carlsbad, CA). Inactivated fetal calf serum (Cat. No. A15-118), Roswell Park Memorial institute (RPMI) 1640 cell culture medium (Cat. No. E15-840) and penicillin-streptomycin (Cat. No. P11-010) were purchased from PAA (Pasching, Austria). All other reagents, where not otherwise specified, were purchased from Sigma-Alrich (St. Louis, MO).

## Equipment.

Cell counts were determined in a Neubauer hemocytometer chamber obtained from Blaubrand, Brand (Wertheim, Germany). Inverted light microscopy images were taken in an AXIOVERT 40 CFL microscope (Zelss, Jana, Germany) using $10 \times$ and $2.5 \times$ objectives. Inkjet printing for this research was carried out using a Microdrop Autodrop system (Microdrop Technologies GmbH, Norderstedt, Germany) equipped with a dampened 70 $\mu$m inner diameter nozzle.

## Cell culture.

The cell line used: mouse fibroblast (L929) cells, (passages 10-15), was kindly provided by Dr. Toblas Pöhlmann (siRNA Laboratory, IOMC, Friedrich-Schiller-University, Jena, Germany). The cells were grown in 5% $CO_2$ at 37 °C in tissue culture plastic flasks in RPMI 1640 growth medium supplemented with heat inactivated fetal calf serum (10% v/v), penicillin (100 units·mL$^{-1}$) and streptomycin (100 mg·mL$^{-1}$).

## Preparation of L929 cell stock suspensions for printing, and viability measurements thereof

A trypan blue solution (0.4 Wt-%) was prepared from an isotonic saline solution (0,85% w/v), and an aliquot (100 $\mu$L) was added to 100 $\mu$L L929 cells in RPMI 1640. The cells were re-suopended, and after 15 minutes the cell suspension was studied by use of a Neubauer hemocytometer and a Leica DMRXP microscope fitted with a $10 \times$ objective. For quantifying the total number of cells, the number of cells in each sector (0.1 $\mu$L) of the hemocytometer was counted in different sectors; if the difference in the count was larger than $\pm$ 4 cells, the measurement was repeated. For detecting the viability of cells (living·(living + dead)$^{-1}$] $\times$ 100%), the viable cells were identified by trypan blue stain-exclusion. The cell density was found to be $1.4 \times 10^6$ cells·mL$^{-1}$. Using this approach, the viability of the original culture was estimated to be 99% percent.

An aliquot cells in RPMI 1640 cell culture medium containing 1,410,000 cells·mL$^{-1}$ was partitioned Into two aliquots and diluted, yielding final concentration values of 700,000 and 350,000 cells·mL$^{-1}$, respectively. The solutions were stored at 4 °C and used as a stock for printing.

## Viability of inkjet-printed L929 cells

The L929 cell culture containing 700,000 cells·mL$^{-1}$ was printed onto a standard microscope glass slide (26 $\times$ 72 mm), using the Microdrop Autodrop system (settings: 96 V, 28 $\mu$s PW, 100 Hz). Each slide contained a microarray of 20 $\times$ 60 spots (100 drops / spot), resulting in 32 $\mu$L of cell culture medium containing 18,200 cells dispensed in total. The spots were covered by oil in the progress of printing, in order to ensure proper contact of the cells with the underlying glass. Immediately after printing, two slides were each placed In a centrifuge tube filled with 45 mL of RPMI 1640 (parallel to the tube walls) and centrifuged for 5 minutes at a rate of 1,000 rpm. The glass slides were removed and centrifugation was repeated for 5 minutes at 3,000 rpm. After centrifugation, the supernatant liquid was discarded, and 20 mL of RPMI was added to each tube and centrifugation was repeated, and this supernatant liquid was discarded as well. The tubes were left upside down for 3 minutes for complete removal of liquid. The content of both tubes was combined using 50 $\mu$L of 0.4% (w/v) trypan blue solution. The cells were re-suspended and analyzed in qudruplicate, using the Neubauer hemocytometer. The results are summarized in Table 1.

**Table 1. Viability data for freshly inkjet-printed cells**

| Total harvested | Cell count in four sectors | Living cell count in 4 sectors | Dead cell count In four sectors | % Viability |
|---|---|---|---|---|
| 20,500 | 164 | 146 | 18 | 89 |
| 17,875 | 143 | 133 | 10 | 93 |
| 24,250 | 194 | 171 | 23 | 88 |
| 19,125 | 153 | 140 | 13 | 91.5 |
| | | | Average: | 90 $\pm$ 2.2% |

**Viability of inkjet-printed L929 cells, including detached cells, after 7 h incubation**

Immediately after printing, the slides were placed In an Incubator, and the cells were incubated at 37 °C under 5% $CO_2$ for 7 h. After the incubation period, the surface of the slides was washed with clean culture medium to remove all unattached cells. Next, an aliquot of 2 mL of trypsin was spread on the slide, and left for 5 minutes in order to detach the cells on the surface. The slides were placed in a centrifuge tube together with previously removed rinsate, and centrifuged for 5 minutes in 1,000 rpm. The glass slides were removed, and centrifugation was repeated for 5 minutes at 3,000 rpm. After centrifugation, the supernatant liquid was discarded, and 20 mL of RPMI was added to each tube and centrifugation was repeated, and this supernatant liquid was discarded as well. The tubes were left upside down for 3 minutes for complete removal of liquid. The content of both tubes was combined using 50 $\mu$L of 0.4% (w/v) trypan blue solution, The cells were re-suspended, and then analyzed In quadruplicate, using the Neubauer hemocytometer. The results are summarized in Table 2.

**Table 2. Viability data for inkjet-printed L929 cells, including non-attached cells, after 7 h incubation**

| Total harvested | Cell count in four sectors | Living cell count in 4 sectors | Dead cell count in four sectors | % Viability |
|---|---|---|---|---|
| 21,250 | 170 | 143 | 27 | 84 |
| 3,325 | 265 | 228 | 37 | 86 |
| 23,000 | 184 | 161 | 23 | 87,5 |
| 26,125 | 209 | 174 | 35 | 83 |
| | | | Average; | 84 $\pm$ 1.5% |

**Viability of attached inkjet-printed L929 cells after 7 h incubation**

The protocol used was identical to the aforementioned, except that 40 mL of fresh culture medium (instead of removed rinsate) was added prior to the first centrifugation. The results are summarized in Table 3.

**Table 3. Viability data for attached inkjet-printed L929 cells after 7 h incubation**

| Total harvested | Cell count in four sectors | Living cell count in 4 sectors | Dead cell count in four sectors | % Viability |
|---|---|---|---|---|
| 21,625 | 173 | 159 | 14 | 92 |
| 20,000 | 160 | 155 | 5 | 97 |
| 14,125 | 113 | 109 | 4 | 96.5 |
| 17,875 | 143 | 136 | 7 | 95 |
| | | | Average: | 95 $\pm$ 2% |

**Optimization of the number of cells**

To empirically find the best combination of cell concentration and number of droplets per spot, arrays of different concentrations of cells ranging from 125,000 to 1,000,000 cells·$mL^{-1}$ were inkjet printed. The droplet size In all cases was measured using a stroboscopic camera, and was estimated to be 80 $\mu$m In diameter (~$2.68\times10^{-7}$ mL). In addition, the number of droplets printed per spot was varied from 1 to 20 drops per spot. Using the Microdrop Autodrop system (settings: 96 V, 28 $\mu$s PW, 100 Hz), small $10\times10$ arrays of spots were dispensed, using various cell concentrations and numbers of drops per spot. The arrays were printed, and then the individual spots were examined under a microscope to count the number of cells in each spot. The results were tabulated, and compared to see which combination yielded arrays with the highest fraction of single-cell spots.

A suspension with a concentration of $0.75\times10^6$ cells·mL$^{-1}$, when dispensing droplets with a diameter of 80 $\mu$m, yields droplets containing 0.201 cells on average. By dispensing five of these, the average number of cells per aliquot would be 1.01 and, thus, virtually one. Using these settings, 50% of the spots exhibited one cell per spot, which was the highest result. This was higher than the results where the calculated average numbers of cells deviate from 1. This is also much higher than 37% expected from a Poisson distribution. The data showed only a slight deviation from the best fit to the latter distribution ($R^2$=0.88).

**Claims**

1. A process for making an array comprising array points in a predetermined pattern on a substrate, each of the array points comprising a predetermined number of a particulate object capable of functioning in an aqueous condition, comprising the steps of:

    (A) providing a hydrophobic liquid onto the substrate; and
    (B) depositing a number of microdroplets of an aqueous suspension containing the particulate object in each of the array points by inkjet technology,

    wherein the predetermined number of the microdroplets of the suspension is determined as a function of the concentration of the suspension and the average volume of the microdroplets of the suspension.

2. The process according to claim 1, wherein the predetermined number of the microdroplets deposited in each of the array points is an integer closest to the product of the predetermined number of the particulate object in the array point and the inverse of the product of the concentration of the suspension and the average volume of the microdroplets.

3. The process according to claim 1 or 2, wherein the hydrophobic liquid is permeable to oxygen.

4. The process according to any one of claim 3, wherein the hydrophobic liquid is chosen from the group consisting of an aliphatic alkane of C8-C20 and a mixture thereof, mineral oil, silicone oil and a mixture thereof.

5. The process according to claim 3 or 4, wherein the particulate object is a biological material, preferably chosen from the group consisting of a cell, a cell fraction, tissue, antibody, microorganism.

6. The process according to any one of claims 1-5, wherein the average volume of the microdroplets of the suspension is between 20 to 100 pL, preferably 24 to 84 pL, more preferably 40-50 pL.

7. The process according to any one of claims 1-6, wherein the average distance between the array points is between 40 to 2000 $\mu$m.

8. The process according to any one of claims 1-7, further comprising the step of (A0) depositing microdroplets of a water miscible anchoring liquid having an equilibrated contact angle with the substrate of between 5 and 90° onto the substrate to form the array points in the predetermined pattern by inkjet technology before and/or during step (A), and the hydrophobic liquid covers the array points in step (A).

9. The process according to claim 8, wherein steps (A) and (A0) involve dispensing an amount of the hydrophobic liquid after each of the array points is formed by the anchoring liquid, the amount being chosen to advance the contact line between the hydrophobic liquid and the substrate to cover the newly formed array point.

10. The process according to claim 7 or 8, wherein the anchoring liquid is a culture medium.

11. The process according to any one of claims 7-10, wherein the average volume of the microdroplets of the anchoring liquid is between 10 pL and 100 nL, more preferably between 100 pL and 1 nL.

12. The process according to any one of claims 1-11, further comprising the step of:

(C) inspecting the array points to determine how many particulate object each of the array points contains after step (B) and determining the array points containing the predetermined number of the particulate object.

13. The process according to any one of claims 1-12, wherein the predetermined number of the particulate object is one.

14. The process according to claim 13, further comprising the step of:

(D) depositing said predetermined number of microdroplets in the array points that contain no cell as determined in step (C).

15. A process for making a single-cell microarray comprising array points comprising single cell, comprising the steps of:

- depositing microdroplets of a culture medium onto a substrate to form the array points in the predetermined pattern by inkjet technology while providing a mineral oil onto the substrate to cover the array points, such that an amount of the mineral oil is deposited subsequently after each of the array points is formed by the mineral oil, the amount being chosen to advance the contact line between the mineral oil and the substrate to cover the newly formed array point;
- depositing a predetermined number of microdroplets of an aqueous suspension containing the cell in each of the array points by Inkjet technology; and
- Inspecting the array points to determine which of the array points contain single cell,

wherein the predetermined number of the microdroplets of the suspension is determined as a function of the concentration of the suspension and the average volume of the microdroplets of the suspension.

Europäisches
Patentamt

European
Patent Office

Office européen
des brevets

# EUROPEAN SEARCH REPORT

Application Number

EP 10 00 7728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | LUONG-VAN E ET AL: "A novel technique for positioning multiple cell types by liquid handling", BIOINTERPHASES JOURNAL PUBLISHED FOR THE AMERICAN VACUUM SOCIETY BY THE AMERICAN INSTITUTE OF PHYSICS USA, vol. 4, no. 2, June 2009 (2009-06), pages 13-18, XP002615231, ISSN: 1559-4106, DOI: DOI:10.1116/1.3122025 * the whole document * ----- | 1-8, 10-14 | INV. B01J19/00 C12M3/00 G01N33/50 B01L3/02 |
| Y | JASON A BARRON ET AL: "Laser Printing of Single Cells: Statistical Analysis, Cell Viability, and Stress", ANNALS OF BIOMEDICAL ENGINEERING, KLUWER ACADEMIC PUBLISHERS-PLENUM PUBLISHERS, NE, vol. 33, no. 2, 1 February 2005 (2005-02-01), pages 121-130, XP019272899, ISSN: 1573-9686 * the whole document * ----- | 1-7, 11-14 | |
| A | US 2004/237822 A1 (BOLAND THOMAS [US] ET AL BOLAND THOMAS [US] ET AL) 2 December 2004 (2004-12-02) * paragraphs [0033], [0059] * ----- | 1-15 | TECHNICAL FIELDS SEARCHED (IPC)<br><br>B01J C12M G01N B01L |
| Y | EP 1 527 888 A2 (HEWLETT PACKARD DEVELOPMENT CO [US]) 4 May 2005 (2005-05-04) * paragraph [0021]; claims 1-4; figure 3 * ----- | 8,10 | |
| A | WO 02/30561 A2 (BIOTROVE INC [US]; HESS ROBERT A [US]; KANIGAN TANYA S [US]; BRENAN CO) 18 April 2002 (2002-04-18) * page 57 * ----- | 1-15 | |

The present search report has been drawn up for all claims

| Place of search | Date of completion of the search | Examiner |
|---|---|---|
| The Hague | 23 December 2010 | Veefkind, Victor |

EPO FORM 1503 03.82 (P04C01)

## ANNEX TO THE EUROPEAN SEARCH REPORT
## ON EUROPEAN PATENT APPLICATION NO.

EP 10 00 7728

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2010

| Patent document cited in search report | | Publication date | Patent family member(s) | | Publication date |
|---|---|---|---|---|---|
| US 2004237822 | A1 | 02-12-2004 | WO | 2004108418 A1 | 16-12-2004 |
| EP 1527888 | A2 | 04-05-2005 | CA | 2486322 A1 | 30-04-2005 |
| | | | JP | 2005130859 A | 26-05-2005 |
| | | | KR | 20050041936 A | 04-05-2005 |
| | | | US | 2005095664 A1 | 05-05-2005 |
| WO 0230561 | A2 | 18-04-2002 | AU | 9680901 A | 22-04-2002 |
| | | | CA | 2425476 A1 | 18-04-2002 |
| | | | EP | 1330306 A2 | 30-07-2003 |
| | | | JP | 4361271 B2 | 11-11-2009 |
| | | | JP | 2004510996 T | 08-04-2004 |
| | | | JP | 2009080106 A | 16-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5744305 A
- US 5658802 A

**Non-patent literature cited in the description**

- **E. LUONG et al.** *Biointerphases,* June 2009, vol. 4 (2), 13-18